# EUROPEAN PATENT APPLICATION

(11) **EP 1 384 447 A1**
(43) Date of publication of application: **28.01.2004**
(21) Application number: 02425477.3
(22) Date of filing: 24.07.2002
(51) Int. Cl.: A61C 8/00

(54) **Torque wrench for dental use**

(71) Applicant: Pedulla', Christian Pio, 20124 Milano (IT); Tolentino, Luca Pierugo, 20123 Milano (IT)
(72) Inventor: Pedulla, Christian Pio, 20124 Milano (IT)
(74) Representative: Faggioni, Marco, Dr. Ing.

(57) **Abstract**

Torque wrench for dental use formed by a main body into which a mechanical screwing device controlling the tightening torque is housed and by a replaceable disposable point portion that is connectable to said main body and comprises a screw-tightening element or the like. When the point portion is connected to the main body, said screwing device and said tightening device are mechanically connected in order to make said tightening element rotate by operating said screwing device.

## Description

The present invention relates to a torque wrench for dental use, in particular an improved torque wrench as regards mechanical efficiency, handling and hygiene.

In dentistry, torque wrenches - as the experts in the art well know - are used for installing intra-bone implants for the reconstruction of missing teeth.

In order to make such implants, dental surgeons must first of all expose the bone, cutting and enlarging the above gum, so as to drill therein a hole for hosting the implant, which hole, depending on its type, may be a smooth hole or a hole into whose internal surface a threading is tapped. An internally perforated and threaded sleeve is then placed into this hole, said sleeve forming the carrying base of the implant. Depending on the type of implant, the sleeve may be externally smooth, in this case it is simply slightly pushed into a smooth hole; or it may be self-threading, in which case it is screwed into a smooth hole; or it may be provided with traditional threading, in which further case it is screwed into an internally threaded hole.

After having installed the sleeve into the cavity formed by the bone, a so-called setscrew is screwed and tightened into the internal hole of the sleeve, said setscrew being so short as to end substantially flush with the upper surface of the sleeve, said surface also being substantially flush with the free surface of the bone. Once this operation is done, the gum is replaced into its seat and stitched and a few months must lapse before performing the following operations. During this period, the wound heals and the bone starts a calcification process around the sleeve that is inserted therein, thus guaranteeing the required stability thereof.

In the second step of the surgical procedure, and after having re-opened a gum portion large enough to expose the setscrew head, the setscrew is removed and a so-called healing screw is inserted in its stead, having a higher length than the previous screw, so as to traverse the gum entirely, and a stem shape identical to that of the final tooth-carrying abutment. Also this screw is tightened onto the sleeve and left to rest for the time necessary for the new cut made into the gum to heal and adjust to the shape of the screw stem.

Once this healing step is over, there is the last step of the surgery, wherein the healing screw is removed and the final abutment is screwed and tightened in its stead, the abutment having a little pin at its upper end - having different shapes depending on the position inside the mouth and the carrying function thereof - onto which the reconstructed tooth is finally placed.

The intra-bone dental implants technology is still constantly and continuously evolving, and slightly different procedures from the above already exist. These, however, have only been reported in order to better clarify the basic procedure of this type of implants and how such a procedure - excluding the various possible alternatives depending on the shape and position of the parts, the operating and healing time - always requires a continuous tightening, onto the basic sleeve, first of working screws of different types and then of the final abutment.

The delicacy of the screw-tightening step should be evident from the above-illustrated implant-assembling procedure. In fact, if the tightening force is too strong, there is the risk of displacing the sleeve from its seat or, worse, damaging the bone into which the sleeve is inserted. If, on the other hand, the tightening force is too weak, the screw/sleeve assembly would not guarantee sufficient steadiness and tightness in time.

In order to solve this problem, suitable torque wrenches have been developed over the past years, which, similarly to the better-known and equally named torques in the automotive field, allow to tighten screws with a controlled torque which, based on the prior experience, proved ideal for regularly achieving the desired objects. Since such objects vary depending on the type and step of the surgery, on the patient's age and general as well as specific health conditions, the market normally offers sets of 2 or 3 torque wrenches, each of which is calibrated at a precise tightening force.

A first drawback of the torque wrenches of the prior art is thus connected to the fact that different torques are required for the different tightening forces required and this implies, on the one hand, higher equipment costs and, on the other hand, overcrowding of dental surgeries, which are notoriously already full of equipment.

A further, more serious drawback of the prior art torque wrenches is, however, connected to the sterilising procedures. Similar to all other instruments used by dental surgeons to operate inside a patient's mouth, also torque wrenches must be sterilised after use. However, it has been observed that when this operation - as happens in most cases - is performed in an autoclave at very high temperatures (for example 120°C), torques undergo a progressive as well as unavoidable loss of calibration. This phenomenon is serious because surgeons cannot sense the degree thereof, therefore they run the risk of operating with unsuitable objects, or they must ensure a frequent substitution or calibration thereof, both of which imply higher equipment costs as well as a heavy charge for the equipment maintenance.

The object of the present invention is thus that of providing an improved torque wrench for dental use that is free from such drawbacks, i.e. a torque which may be used for tightening with differently adjusted forces and is not subject to alterations of its initial calibration over the time.

Said object is achieved, according to the present invention, by means of a torque wrench for dental use, characterised in that it is composed of a main body, into which a mechanical screwing device controlling the tightening-torque is housed, and of a disposable replaceable point portion that is connectable to said main body and comprises a screw-tightening element or the like, and in that, when the point portion is connected to the main body, said screwing device and said tightening device are mechanically connected in order to make said tightening element rotate by operating said screwing device.

Further characteristics and advantages of the present invention will result from the following detailed description of one preferred embodiment thereof, illustrated by the appended drawings, wherein:
Fig. 1 is a partially sectional side view of the torque wrench according to the present invention;
Fig. 2 is a sectional view of the torque wrench along the line ll-ll of fig. 1;

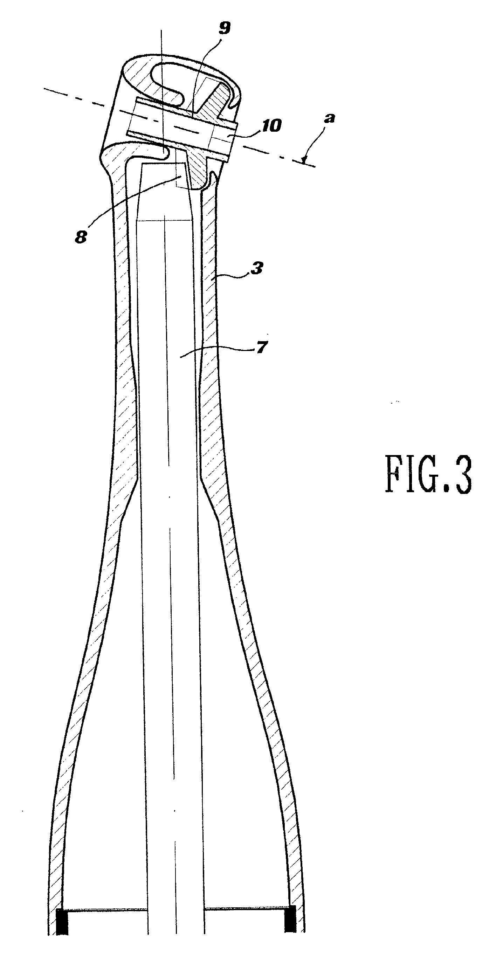

Fig. 3 is an enlarged sectional view similar to fig. 2 of only the disposable replaceable point portion; and

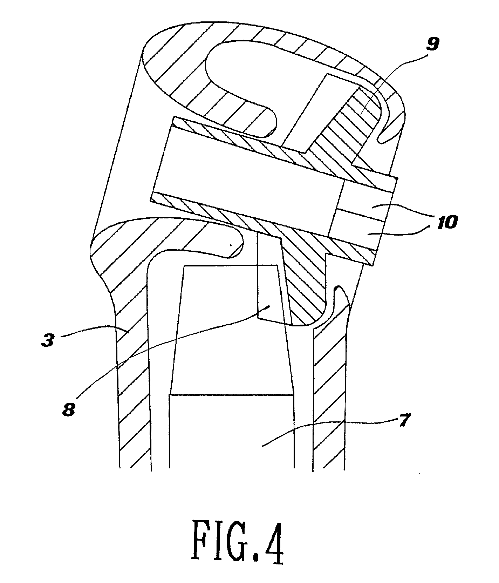

Fig. 4 is a further enlarged sectional view similar to fig. 2 of the head of the disposable replaceable point portion.

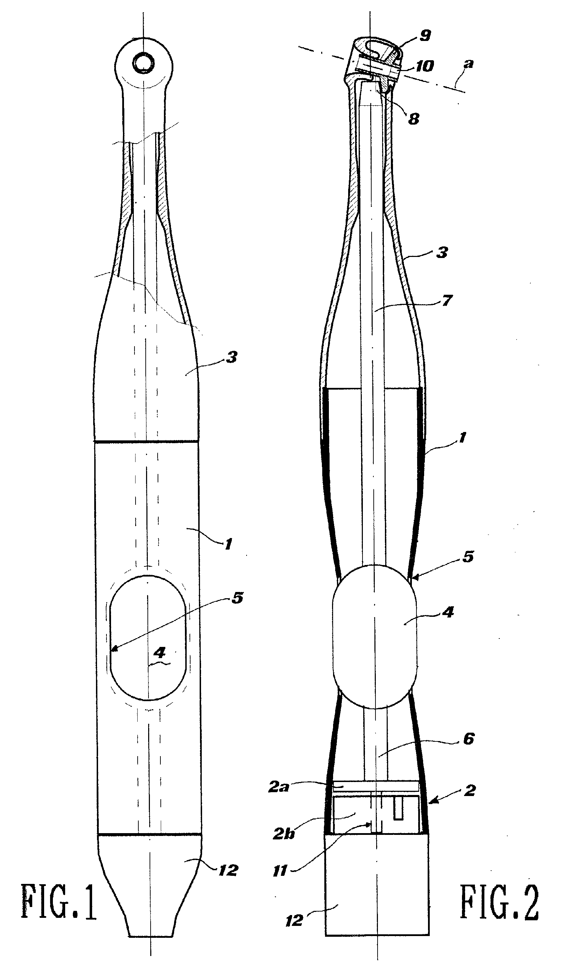

As can be seen in figs. 1 and 2, the torque wrench according to the present invention is composed of a substantially cylindrical and hollow main body 1, which constitutes the torque wrench handle, onto which a clutch 2 at its lower end and a point portion 3 at its upper end are connected and fastened. In the central part of the cylindrical body 1, a drum 4 is housed, partly projecting from two windows 5 facing each other in the central part of the body 1, as can be easily seen in the sectional view of fig. 2.

The body 1, the drum 4 and the point portion 3 furthermore house along their symmetry axis two coaxial shafts, a lower shaft 6 and an upper shaft 7, respectively. One end of the lower shaft 6 is integral with the drum 4 and the other end is integral with the first portion of the clutch 2; shaft 7 is on the contrary free to rotate relative to drum 4, one of its portions being driven by the internal walls of the point portion 3 and the opposed end ending with a conical gear apt to form a bevel gear pair 8 with a meshing conical gear formed onto a hollow tightening element 9. The hollow tightening element 9, similar to shafts 6 and 7, is preferably made of a metallic material and is pushed into the front tip of the point portion 3, so as to be tightly and elastically held by the walls thereof, perfectly free to rotate around its symmetry axis a. At one end of the internal cavity of the tightening element 9, a wrenching surface 10 is then provided, with which the instrument may engage the head of a screw or the like, as used in dentistry, for the tightening thereof.

Clutch 2 is tightly fastened to the base of body 1 and is apt to be automatically declutched when the torque applied to the clutch reaches a predefined value. Different embodiments of this type of clutch are available on the market, all equally usable with the torque wrench according to the present invention. One preferred embodiment - well-known per se, therefore not illustrated in detail herein - is composed of two reciprocally idle coaxial parts, made integral to rotation by a ratchet held in position by suitable spring means. When exceeding a predefined value of the tightening torque, the spring means releases the ratchet and the two parts of the clutch are thus automatically declutched.

In the illustrated embodiment of the torque wrench according to the present invention, the first part of the clutch 2, namely part 2a, is connected, as seen, to the lower shaft 6. The other part of the clutch 2, namely part 2b, is integral with a little shaft 11, coaxial with shafts 6 and 7 and having an external smaller diameter than the internal diameter of the shafts 6 and 7, in order to be housed inside thereof. The little shaft 11 is then mechanically connected, with any known method, to the shaft 7, so that both shafts are jointly rotating.

The use of the torque wrench according to the present invention is very easy and intuitive with respect to the above description.

As a first step, the surgeon inserts the screw or the like into the female threading provided for this screw inside the implant. Normally, this is done manually in order to directly ascertain the precise positioning of the screw and the correct engagement of the thread with the nut screw. At this point, the torque wrench according to the present invention is inserted into the patient's mouth, engaging the tightening element 9 - in particular the wrenching surface 10 - with the screw head. Now, with two fingers, the surgeon causes the rotation of the drum 4 around its own axis and, in sequence, the rotation of the shaft 6, of part 2a of the clutch, of part 2b connected thereto through said ratchet, of the little shaft 11, of shaft 7 and, finally, of the element 9, thus obtaining the desired tightening.

As the tightening torque increases, the tension of the spring means inside clutch 2 also increases, until the threshold value that causes the release of the ratchet blocking the two parts 2a and 2b of the clutch is reached. The snapping of the spring and the subsequent free rotation of the drum 4, relieved of all resistance, let the surgeon know that the tightening has reached the desired torque value.

According to the main feature of the invention, once the work on one patient is finished, the point portion 3 and the respective tightening element 9, both of which are disposable, are discarded and substituted by a new and wholly sterile point portion and respective tightening element. The meshing of the bevel gear pair 8 is obtained without any difficulty when inserting point portion 3 onto the body 1, because the shaft 7 is carefully driven into the desired position by the internal walls of the point portion 3. Thus, the body 1 and the shaft 7 of the torque wrench, which do not come into direct contact with the patient's mouth, only require general cleaning and disinfection, as required by the bases of all instruments normally used in dentistry.

Having thus completely avoided the need to sterilise the torque wrench, a first basic object of the invention is reached: that of always providing a perfectly constant torque wrench calibration, as the spring means of the clutch 2 undergoes no thermal changes that may spoil or change the features thereof.

Such high calibration stability during the declutching step of the clutch allows to make said clutch in an adjustable way, that not being possible in the prior art torque wrenches whose design had to be as linear as possible in order to avoid that calibration change problems, due to the sterilising operations, were amplified by structural factors interfering with the deformation structure of the spring means.

Since this problem is completely solved by the torque wrench according to the present invention, it is possible to provide this wrench with a calibration-adjusting device for the clutch 2, by means of a mechanical device varying the rest shape of the spring means or the respective attachments to the two parts of the clutch 2, thus varying the threshold value at which the clutch 2 is declutched. Preferably, said calibration is obtained using the bottom end 12 of the body 1, whose rotation by two or more notches determines the calibration of the torque wrench at different torque values, for example 10/20/30 Ncm.

It is therefore evident that the torque wrench according to the present invention has fully achieved all the proposed objects, solving, with a simple, effective and economical structure, all the drawbacks of the prior art torque wrenches.

The torque wrench of the present invention has been described with reference to a preferred embodiment thereof, but it is evident that the scope of the invention is not to be considered limited to said embodiment, but extends to all possible alternatives, within the reach of an expert in the art, included in the definitions provided in the appended claims.

## Claims

1. Torque wrench for dental use, **characterised in that** it comprises a main body, into which a mechanical screwing device controlling the tightening torque is housed, and by a disposable replaceable point portion that is connectable to said main body and comprises a screw-tightening element or the like, and **in that**, when the point portion is connected to the main body, said screwing device and said tightening device are mechanically connected in order to make said tightening element rotate by operating said screwing device.

2. Torque wrench as in claim 1), wherein said screwing device controlling the tightening torque comprises a clutch, of the type apt to be automatically declutched when reaching a predefined tightening torque value.

3. Torque wrench as in claim 2), wherein said screwing device is operated by a drum which is partially housed within said main body and is coaxial to and integral with - via a first shaft - with a first portion of said clutch.

4. Torque wrench as in claim 3), wherein said drum partially projects from two windows facing each other provided in said main body.

5. Torque wrench as in claim 3), wherein a second portion of said clutch is integral - via a little transmission shaft housed inside both said first shaft and the drum - with a second driving shaft projecting from said first main body.

6. Torque wrench as in claim 5), wherein the free end of said second driving shaft is provided with a conical gear apt to mesh, through a bevel gear pair, with a corresponding conical gear provided on the external surface of said tightening element.

7. Torque wrench as in claim 6), wherein said bevel gear pair is formed when connecting said point portion onto said main body.

8. Torque wrench as in claim 7), wherein said second driving shaft is at least partially driven, through a sliding contact, by the internal walls of said point portion.

9. Torque wrench as in any one of the preceding claims, further comprising a calibration-adjusting device for the declutching automatic devices of said clutch.

10. Torque wrench as in claim 9), wherein said adjusting device is operated by a knob attached to the base of said main body.
